# EUROPEAN PATENT APPLICATION

(11) **EP 2 584 398 A2**
(43) Date of publication of application: **24.04.2013**
(21) Application number: 12188689.9
(22) Date of filing: 16.10.2012
(51) Int. Cl.: G02F 1/1333

(54) **Display**

(30) Priority: 17.10.2011 JP 2011228294; 31.08.2012 JP 2012192600
(71) Applicant: Funai Electric Advanced Applied Technology Research Institute Inc., Osaka 574-0013 (JP)
(72) Inventor: Kita, Yuki, Daito-shi, Osaka 574-0013 (JP); Fujikawa, Akihiro, Daito-shi, Osaka 574-0013 (JP)
(74) Representative: Grünecker, Kinkeldey, Stockmair & Schwanhäusser

(57) **Abstract**

This display (1) includes a housing (21), a display portion (62), a substrate (41) mounted on an inner surface of the housing and provided with a capacitive switch (411), and a substrate fixing member (51) having a first pressing portion (511) pressing a position, corresponding to the capacitive switch, of a surface of the substrate opposite to the side provided with the capacitive switch, while the substrate fixing member is formed to fix the substrate to the housing in a state pressing the substrate so that the capacitive switch and the inner surface of the housing are in close contact with each other.

## Description

### BACKGROUND OF THE INVENTION

### Field of the Invention

The present invention relates to a display, and more particularly, it relates to a display provided with a capacitive switch.

### Description of the Background Art

A capacitive touch switch provided with a capacitive switch is known in general, as disclosed in Japanese Patent Laying-Open No. 2007-207531, for example.

The aforementioned Japanese Patent Laying-Open No. 2007-207531 discloses a capacitive touch switch including a glass plate and an electrode sheet (substrate) provided with a switch electrode (capacitive switch). In this capacitive touch switch, the switch electrode is bonded to the inner surface of the glass plate through an adhesive, thereby preventing the space between the switch electrode and the glass plate from formation of an air layer and suppressing reduction in sensitivity of the switch electrode.

While the capacitive touch switch according to the aforementioned Japanese Patent Laying-Open No. 2007-207531 is capable of preventing the space between the switch electrode and the glass plate from formation of an air layer and suppressing reduction in sensitivity of the switch electrode, however, the switch electrode (capacitive switch) is bonded to the inner surface of the glass plate through the adhesive and hence it is disadvantageously difficult to detach the switch electrode mounted on the glass plate. When the capacitive touch switch described in the aforementioned Japanese Patent Laying-Open No. 2007-207531 is applied to a display, therefore, replaceability (reworkability) of the switch electrode of the display is disadvantageously deteriorated.

### SUMMARY OF THE INVENTION

The present invention has been proposed in order to solve the aforementioned problem, and an object of the present invention is to provide a display capable of improving replaceability (reworkability) of a capacitive switch while suppressing reduction in sensitivity of the capacitive switch.

A display according to an aspect of the present invention includes a housing, a display portion having a display region arranged to be exposed from the housing, a substrate mounted on an inner surface of the housing and provided with a capacitive switch on a surface closer to the inner surface of the housing, and a substrate fixing member having a first pressing portion pressing a position, corresponding to the capacitive switch, of a surface of the substrate opposite to the side provided with the capacitive switch toward the inner surface of the housing, while the substrate fixing member is formed to fix the substrate to the housing in a state pressing the substrate so that a surface of the capacitive switch closer to the housing and the inner surface of the housing are in close contact with each other.

In the display according to the aspect of the present invention, as hereinabove described, the substrate fixing member having the first pressing portion pressing the position, corresponding to the capacitive switch, of the surface of the substrate opposite to the side provided with the capacitive switch toward the inner surface of the housing is provided while the substrate fixing member is formed to fix the substrate to the housing in the state pressing the substrate so that the surface of the capacitive switch closer to the housing and the inner surface of the housing are in close contact with each other, whereby the substrate fixing member can fix the substrate while pressing the capacitive switch against the inner surface of the housing in a close contact state without employing an adhesive. Therefore, the space between the capacitive switch and the housing can be inhibited from formation of an air layer when the substrate fixing member fixes the substrate, while the capacitive switch and the housing can be easily separated from each other by unfixing the substrate fixing member. Consequently, replaceability (reworkability) of the capacitive switch can be improved while suppressing reduction in sensitivity of the capacitive switch.

In the aforementioned display according to the aspect, the first pressing portion of the substrate fixing member preferably includes a projecting portion pressing the position, corresponding to the capacitive switch, of the surface of the substrate opposite to the side provided with the capacitive switch. According to this structure, the projecting portion can easily press the position of the substrate corresponding to the capacitive switch toward the inner surface of the housing.

In this case, the projecting portion is preferably formed by a rib integrally provided on the substrate fixing member. According to this structure, the rib integrally provided on the substrate fixing member can easily press the position of the substrate corresponding to the capacitive switch toward the inner surface of the housing with no requirement for increasing the number of components.

In the aforementioned structure having the projecting portion formed by the rib, a plurality of capacitive switches are preferably provided on the surface of the substrate closer to the inner surface of the housing, and the rib preferably has a width smaller than the width of the capacitive switches in a direction where the plurality of capacitive switches are adjacent to each other and has a shape extending in a direction perpendicular to the direction where the plurality of capacitive switches are adjacent to each other. According to this structure, the slender rib extending in the direction perpendicular to the direction where the plurality of capacitive switches are adjacent to each other can press the capacitive switches with a small width in the direction where the capacitive switches are adjacent to each other. Thus, the rib can be so deflected that an excellent contact state can be maintained on a surface (pressing surface) of the rib in contact with the substrate by absorbing dimensional dispersion of the rib, dissimilarly to a case of pressing the capacitive switches with a large width in the direction where the capacitive switches are adjacent to each other. Consequently, the rib can stably press positions of the substrate corresponding to the capacitive switches.

In the aforementioned structure having the first pressing portion including the projecting portion, the projecting portion is preferably formed to press a position corresponding to a central portion of the capacitive switch in plan view. According to this structure, the projecting portion can effectively press the capacitive switch against the inner surface of the housing.

In the aforementioned structure having the first pressing portion including the projecting portion, the substrate fixing member is preferably formed to be fixed to the housing in a state convexly warping in a direction opposite to the inner surface of the housing by reaction force of the projecting portion pressing the substrate. According to this structure, the substrate fixing member warping in the direction opposite to the inner surface of the housing can press the substrate against the inner surface of the housing due to force for returning to the original (unwarping) shape, whereby the substrate fixing member can easily fix the substrate while pressing the capacitive switch against the inner surface of the housing in the close contact state.

In the aforementioned display according to the aspect, a plurality of capacitive switches are preferably provided on the surface of the substrate closer to the inner surface of the housing, and the display is preferably so formed that the first pressing portion presses a partial position in a plurality of positions, corresponding to the capacitive switches, of the surface of the substrate opposite to the side provided with the capacitive switches. According to this structure, the number of the first pressing portion can be reduced dissimilarly to a case of pressing all of the plurality of positions corresponding to the capacitive switches, whereby the structure of the display can be inhibited from complication.

In the aforementioned display according to the aspect, the housing preferably includes a mounting portion for mounting the substrate fixing member, the mounting portion preferably includes a first positioning portion positioning the substrate with respect to the housing, and the substrate fixing member is preferably mounted on the mounting portion to press the substrate with the first pressing portion in a state where the first positioning portion positions the substrate with respect to the housing. According to this structure, the mounting portion for mounting the substrate fixing member also serves as the first positioning portion positioning the substrate with respect to the housing, whereby no dedicated first positioning portion for positioning the substrate with respect to the housing may be separately provided but increase in number of components can be suppressed.

In this case, the mounting portion preferably includes a second positioning portion positioning the substrate fixing member with respect to the housing, and the substrate fixing member is preferably mounted on the mounting portion to press the substrate with the first pressing portion in a state where the first positioning portion and the second positioning portion position the substrate with respect to the housing. According to this structure, the mounting portion for mounting the substrate fixing member also serves as the second positioning portion positioning the substrate with respect to the housing, whereby no dedicated second positioning portion for positioning the substrate with respect to the housing may be separately provided but increase in number of components can be suppressed. Further, both of the substrate and the substrate fixing member are positioned with respect to the housing, whereby the first pressing portion of the substrate fixing member can reliably press the position of the substrate corresponding to the capacitive switch.

In the aforementioned structure having the mounting portion including the second positioning portion, the substrate fixing member preferably includes a temporary mounting hook, the housing preferably includes a hook engaging portion engaging with the temporary mounting hook of the substrate fixing member, and the substrate fixing member is preferably formed to be temporarily mounted by engaging the temporary mounting hook with the hook engaging portion of the housing in a state positioned with respect to the housing by the second positioning portion. According to this structure, the substrate fixing member can be mounted on the housing in the state temporarily mounted on the mounting portion with the hook and the hook engaging portion, whereby a mounting operation for the substrate fixing member can be easily performed.

In the aforementioned structure having the substrate fixing member including the temporary mounting hook, the substrate fixing member is preferably formed to be fixed to the mounting portion with a fastening member in a state positioned with respect to the housing by the second positioning portion and temporarily mounted by engaging the temporary mounting hook with the hook engaging portion of the housing. According to this structure, the temporarily mounted substrate fixing member positioned with respect to the housing by the second positioning portion can be reliably mounted on the mounting portion with the fastening member.

In the aforementioned display according to the aspect, the substrate fixing member preferably has a rectangular shape in plan view, and is preferably so formed that an outer edge portion extending in the longitudinal direction of the rectangular shape has a larger thickness than another portion in a direction for fixing the substrate fixing member to the housing. According to this structure, mechanical strength of the substrate fixing member can be increased, whereby the substrate fixing member can be inhibited from distortion. Consequently, the substrate fixing member can stably press the position of the substrate corresponding to the capacitive switch toward the inner surface of the housing.

In the aforementioned display according to the aspect, a transparent resin plate is preferably mounted on the housing, the substrate fixing member preferably includes a second pressing portion having a height identical to the height of the first pressing portion, and the second pressing portion is preferably formed to press a portion around a position, corresponding to the transparent resin plate, of a side of the substrate opposite to a side opposed to the transparent resin plate in a state holding the transparent resin plate between the housing and the substrate. According to the present invention, the transparent resin plate denotes a wide concept not restricted to a resin plate which is transparent but including a semitransparent resin plate. According to this structure, the second pressing portion presses the transparent resin plate mounted on the housing toward the inner surface of the housing, whereby the transparent resin plate can be inhibited from subsiding into the housing due to external force applied in such a case that the user presses the transparent resin plate into the housing from outside.

According to the present invention, as hereinabove described, replaceability (reworkability) of the capacitive switch can be improved while suppressing reduction in sensitivity of the capacitive switch.

The foregoing and other objects, features, aspects and advantages of the present invention will become more apparent from the following detailed description of the present invention when taken in conjunction with the accompanying drawings.

### BRIEF DESCRIPTION OF THE DRAWINGS

Fig. 1 is an exploded perspective view showing the overall structure of a television set according to an embodiment of the present invention;
Fig. 2 is a plan view of the television set according to the embodiment of the present invention as viewed from front;
Fig. 3 is an exploded perspective view showing a mounting state of an operation substrate of the television set according to the embodiment of the present invention;
Fig. 4 is an enlarged view of a lower portion of a front cabinet of the television set according to the embodiment of the present invention;
Fig. 5 illustrates a transparent resin plate of the television set according to the embodiment of the present invention;
Fig. 6 illustrates the operation substrate of the television set according to the embodiment of the present invention;
Fig. 7 illustrates a front cabinet side of a substrate fixing member of the television set according to the embodiment of the present invention;
Fig. 8 illustrates the substrate fixing member of the television set according to the embodiment of the present invention as viewed from above;
Fig. 9 illustrates a side of the substrate fixing member of the television set according to the embodiment of the present invention opposite to the front cabinet;
Fig. 10 is a sectional view taken along the line 100-100 in Fig. 7;
Fig. 11 illustrates a state mounting the substrate fixing member on the front cabinet of the television set according to the embodiment of the present invention;
Fig. 12 is a sectional view taken along the line 200-200 in Fig. 11;
Fig. 13 is a sectional view taken along the line 300-300 in Fig. 11;
Fig. 14 illustrates a state mounting the transparent resin plate on the front cabinet of the television set according to the embodiment of the present invention;
Fig. 15 illustrates a state mounting the transparent resin plate and the operation substrate on the front cabinet of the television set according to the embodiment of the present invention;
Fig. 16 illustrates a first modification of the substrate fixing member of the television set according to the embodiment of the present invention; and
Fig. 17 illustrates a second modification of the substrate fixing member of the television set according to the embodiment of the present invention.

### DESCRIPTION OF THE PREFERRED EMBODIMENTS

An embodiment of the present invention is now described with reference to the drawings.

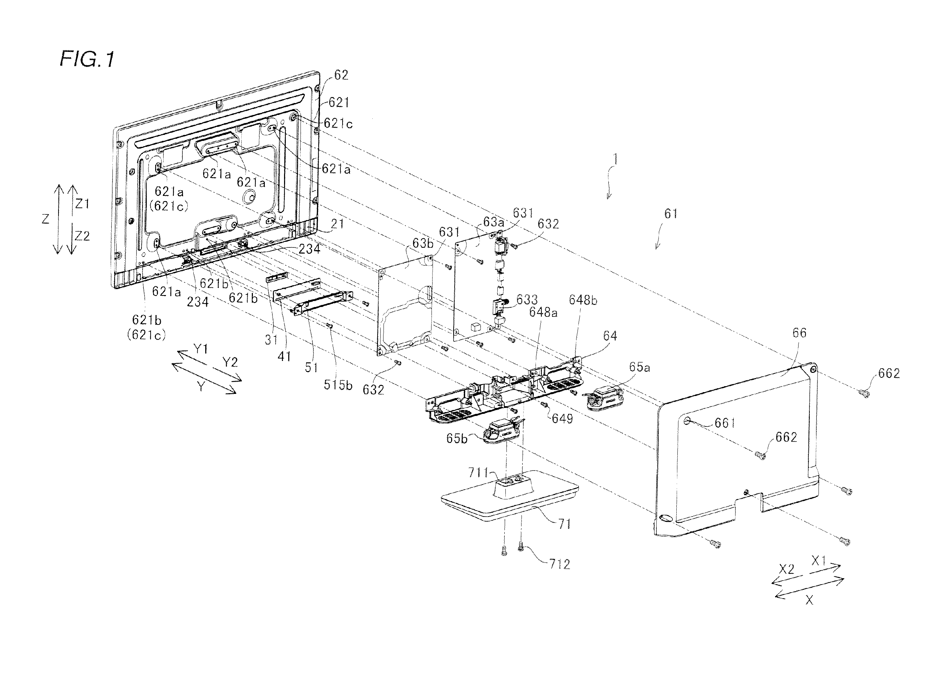

The structure of a television set 1 according to the embodiment of the present invention is described with reference to Figs. 1 to 15. The television set 1 is an example of the "display" in the present invention.

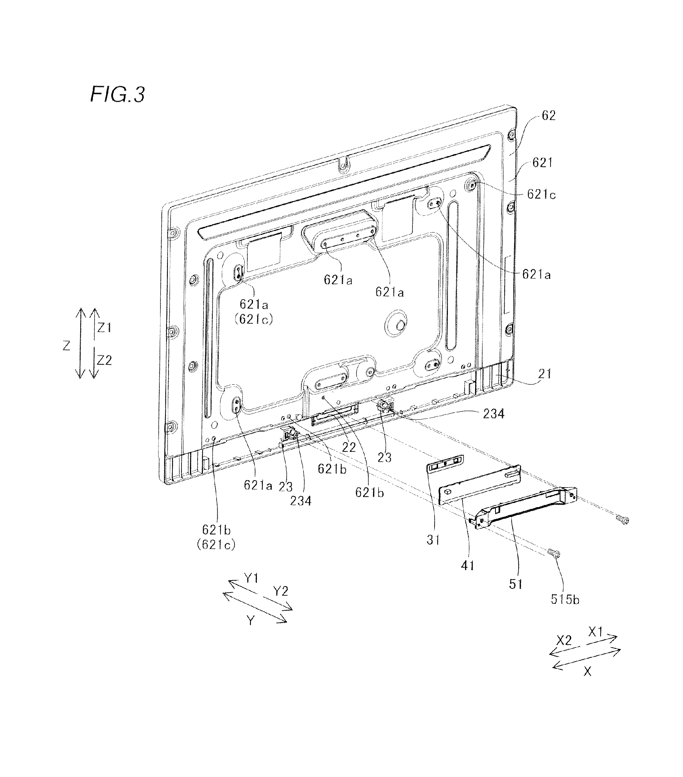

The television set 1 according to the embodiment of the present invention includes a frame-shaped front cabinet 21, as shown in Figs. 1 to 3. A transparent resin plate 31 having a lens function, an operation substrate 41 and a substrate fixing member 51 are mounted on the front cabinet 21, as shown in Figs. 1 and 3. The television set 1 further includes a display body 61 and a stand member 71. The display body 61 includes a display portion 62 having display region exposed from the frame-shaped front cabinet 21, circuit boards 63a and 63b, a speaker/stand mounting member 64, speakers 65a and 65b and a cover member 66. The front cabinet 21 is an example of the "housing" in the present invention. The operation substrate 41 is an example of the "substrate" in the present invention.

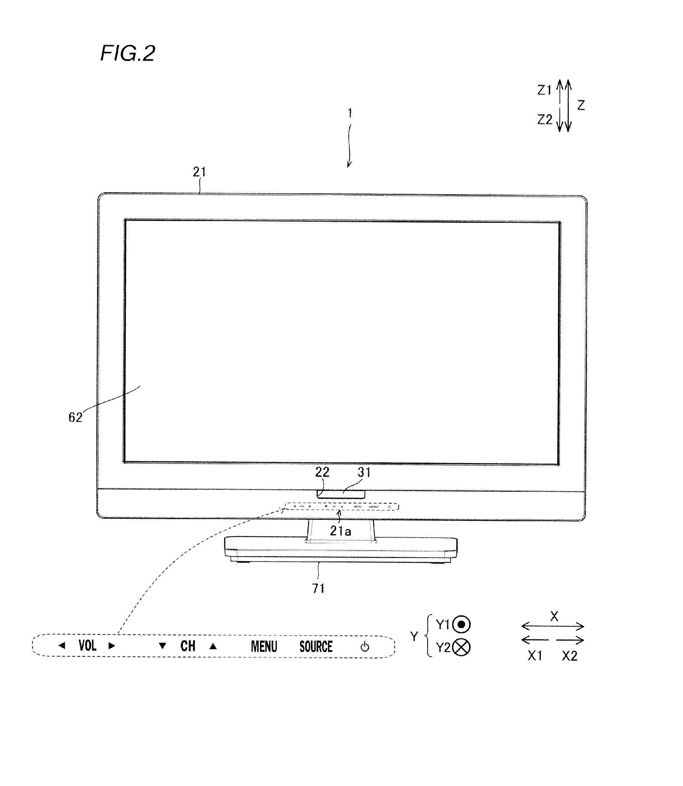

The front cabinet 21 is substantially rectangularly formed in front elevational view, as shown in Fig. 2. The front cabinet 21 is made of resin such as polystyrene.

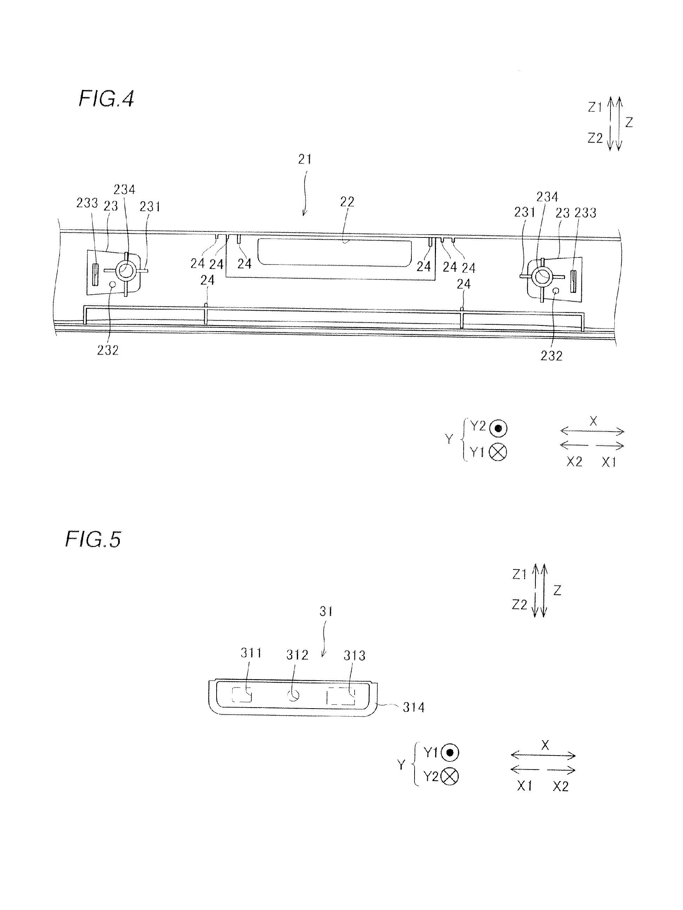

According to this embodiment, the front cabinet 21 is provided with a transparent resin plate mounting hole 22 into icy the transparent resin plate 31 is fitted and two mounting portions 23 fixing the substrate fixing member 51 to the front cabinet 21, as shown in Figs. 3 and 4. The transparent resin plate mounting hole 22 is provided around a lower center of the front cabinet 21. The transparent resin plate mounting hole 22 has a substantially rectangular shape (laterally long rectangular shape), and is so formed that the transparent resin plate 31 (see Fig. 5) is fitted thereinto. The two mounting portions 23 are provided around a lower center on the inner side (along arrow Y2) of the front cabinet 21. The transparent resin plate mounting hole 22 of the front cabinet 21 is provided between the two mounting portions 23. The two mounting portions 23 are arranged at a prescribed interval from each other.

The respective mounting portions 23 are provided with first positioning portions 231 positioning the operation substrate 41 with respect to the horizontal direction (direction X) of the front cabinet 21, second positioning portions 232 positioning the substrate fixing member 51, hook engaging portions 233 engaging with hooks 514 of the substrate fixing member 51 and threaded holes 234 for fixing the substrate fixing member 51 to the mounting portions 23 with screws 515b (see Fig. 3; , as shown in Fig. 4. The first positioning portions 231 are provided to protrude in the direction where the two mounting portions 23 are opposed to each other. Further, the first positioning portions 231 are formed by linear ribs extending in a direction Y. The second positioning portions 232 are constituted of columnar bosses protruding along arrow Y2 (rearward).

The hook engaging portions 233 are provided on positions outward beyond the first and second positioning portions 231 and 232 of the two mounting portions 23 in the direction X. The hook engaging portions 233 are in the form of holes engaging with the hooks 514 of the substrate fixing member 51. Eight third positioning portions 24 positioning the operation substrate 41 with respect to the vertical direction (direction Z) of the front cabinet 21 are provided on an inner surface of the front cabinet 21. The screws 515b are examples of the "fastening member" in the present invention.

The transparent resin plate 31 is mounted on the transparent resin plate mounting hole 22 around the lower center of the front cabinet 21, as shown in Figs. 2 and 3. The transparent resin plate 31 is formed to be capable of transmit light. F3arther, the transparent resin plate 31 is formed to transmit light emitted by an LED 413 provided on the operation substrate 41 with easily visually recognizable directivity. The transparent resin plate 31 is substantially rectangularly formed, as shown in Fig. 5. Recess portions 311, 312 and 313 corresponding to respective shapes of an illuminance sensor 412, the LED 413 and an IR photoreceiving portion 414 provided on the operation substrate 41 are formed on the transparent resin plate 31 on the inner side (along arrow Y2) of the television set 1. The transparent resin plate 31 is so formed that an edge portion 314 thereof comes into contact with the inner surface of the front cabinet 21. Further, the transparent resin plate 31 is so formed that a front portion (along arrow Y1) thereof is substantially flush with a front portion (along arrow Y1) of the front cabinet 21. The transparent resin plate 31 is made of ABS (acrylonitrile-butadiene-styrene copolymer synthetic) resin. The "transparent resin plate" in this embodiment denotes a transparent or semitransparent resin plate.

The operation substrate 41 includes seven capacitive switches 411 capable of detecting change in capacitance, the illuminance sensor 412 detecting brightness of a place where the television set 1 is set, the LED (light-emitting diode) 413 indicating a power supply state of the television set 1 and the IR photoreceiving portion 414 receiving an IR signal transmitted from a remote control. The illuminance sensor 413, the LED 413 and the IR photoreceiving portion 414 are provided on a non-resist portion 415 of the operation substrate 41 provided with no resist. Each capacitive switch 411 is formed to detect an operation of the user by detecting capacitance changed when the user touches an operation portion 21a (see Fig. 2) on the front side (along arrow Y1) of the front cabinet 21 corresponding to each capacitive switch 411. The non-resist portion 415 of the operation substrate 41 is formed to function as a ground pattern discharging static electricity penetrating into the periphery of the operation substrate 41. The seven capacitive switches 411 are arranged at prescribed intervals in the longitudinal direction (direction X) of the operation substrate 41.

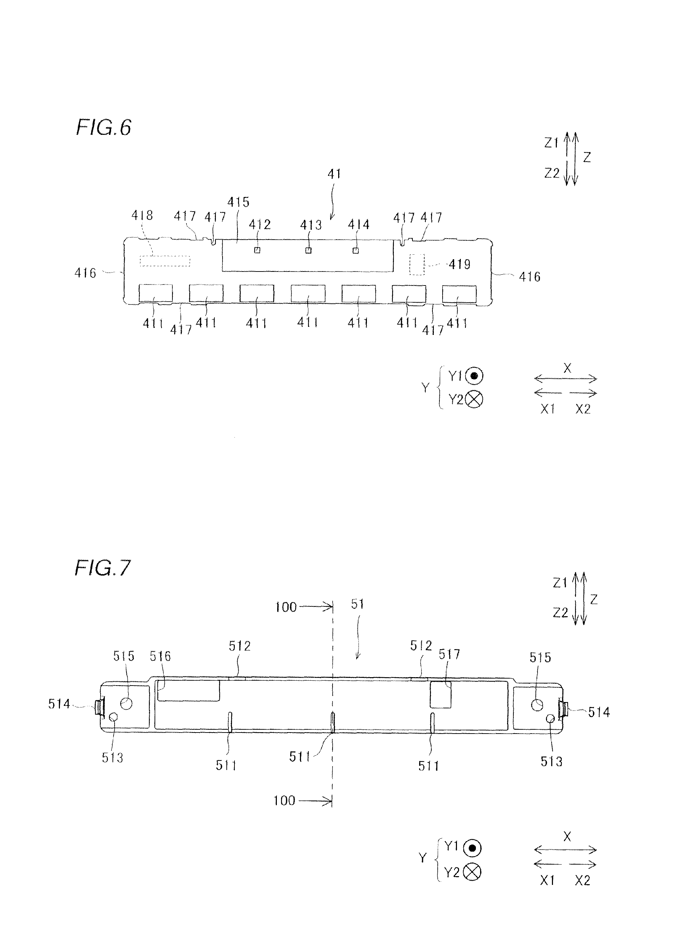

As shown in Fig. 2, the seven capacitive switches 411 are set to correspond to operations of (turning down) the volume, (turning up) the volume, (turning down) the channel, (turning up) the channel, a menu, an input source and a power source respectively from the left side (along arrow X1). The seven capacitive switches 411 have substantially rectangular shapes (laterally long rectangular shapes) respectively, as shown in Fig. 6. The capacitive switches 411 are substantially flush with the front surface (along arrow Y1) of the operation substrate 41. The operation substrate 41 is so mounted on the front cabinet 21 that the capacitive switches 411 are in close contact with the inner surface of the front cabinet 21. Further, the operation substrate 41 is so set on the front cabinet 21 that the illuminance sensor 412, the LED 413 and the IR photoreceiving portion 414 are opposed to the recess portions 311, 312 and 313 of the transparent resin plate 31 (see Fig. 5) mounted on the front cabinet 21.

The operation substrate 41 is so formed that both end portions 416 in the longitudinal direction (direction X) are brought into contact with the first positioning portions 231 of the substrate fixing member 51 thereby positioning the operation substrate 41 in the direction X. The operation substrate 41 includes notch portions 417 positioned by the third positioning portions 24 (see Fig. 4) of the front cabinet 21 on both end portions in the short-side direction (direction Z). Terminals 418 and 419 are provided on the surface of the operation substrate 41 on the inner side (along arrow Y2) of the television set 1. The terminal 418 is connected to the circuit board 63a by an unshown wire. A signal as the capacitance change detected by each capacitive switch 411 is transmitted to the circuit board 63a (see Fig. 1) from the terminal 418 through the unshown wire. The terminal 419 is connected to a personal computer and used when the user updates firmware controlling the capacitive switches 411 of the operation substrate 41.

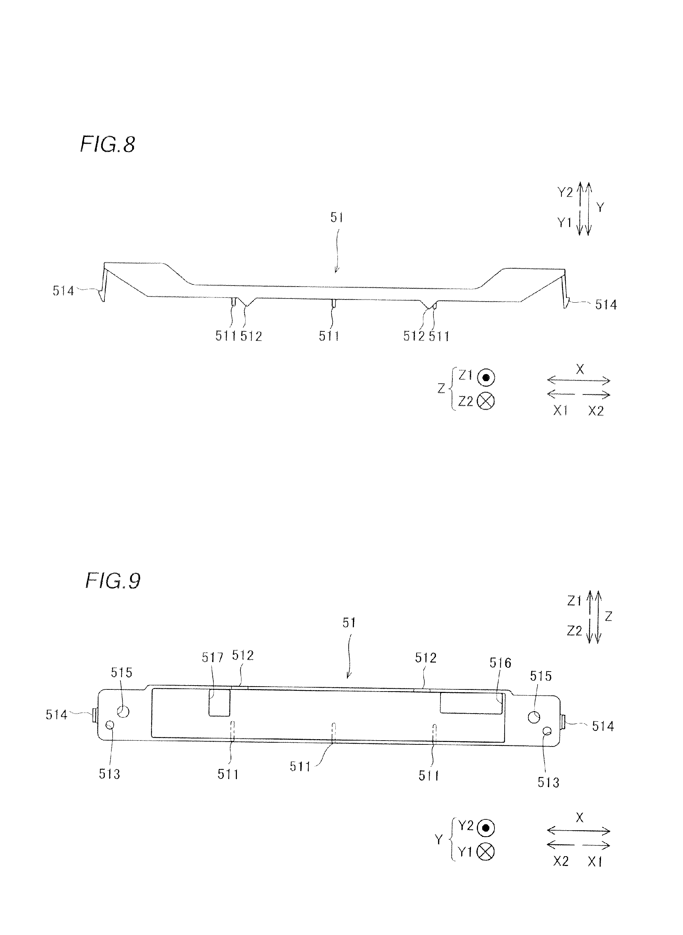

The substrate fixing member 51 has a function of fixing the operation substrate 41 to the inner surface of the front cabinet 21. Further, the substrate fixing member 51 is formed to fix the operation substrate 41 to the front cabinet 21 in a state pressing the operation substrate 41 so that the surfaces of the capacitive switches 411 closer to the front cabinet 21 and the inner surface of the front cabinet 21 are in close contact with each other. The substrate fixing member 51 is substantially rectangularly formed in plan view, as shown in Figs. 7 and 9. The substrate fixing member 51 is provided on the inner side (along arrow Y1) of the television set 1 with three ribs 511 and two pressing portions 512. The three ribs 511 and the two pressing portions 512 are formed to have substantially identical heights. The substrate fixing member 51 is so formed that portions of the substrate fixing member 51 provided with the ribs 511 are substantially horizontal with respect to the inner surface side of the front cabinet 21. The ribs 511 and the pressing portions 512 are integrally formed on the substrate fixing member 51 by resin molding. The ribs 511 are examples of the "first pressing portion" or the "projecting portion" in the present invention. The pressing portions 512 are examples of the "second pressing portion" in the present invention.

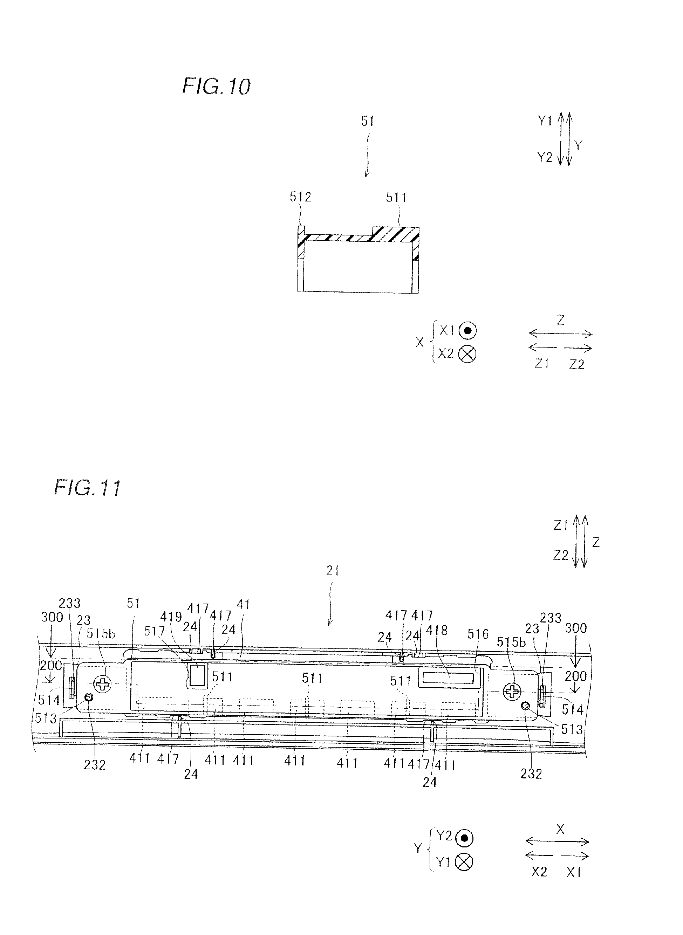

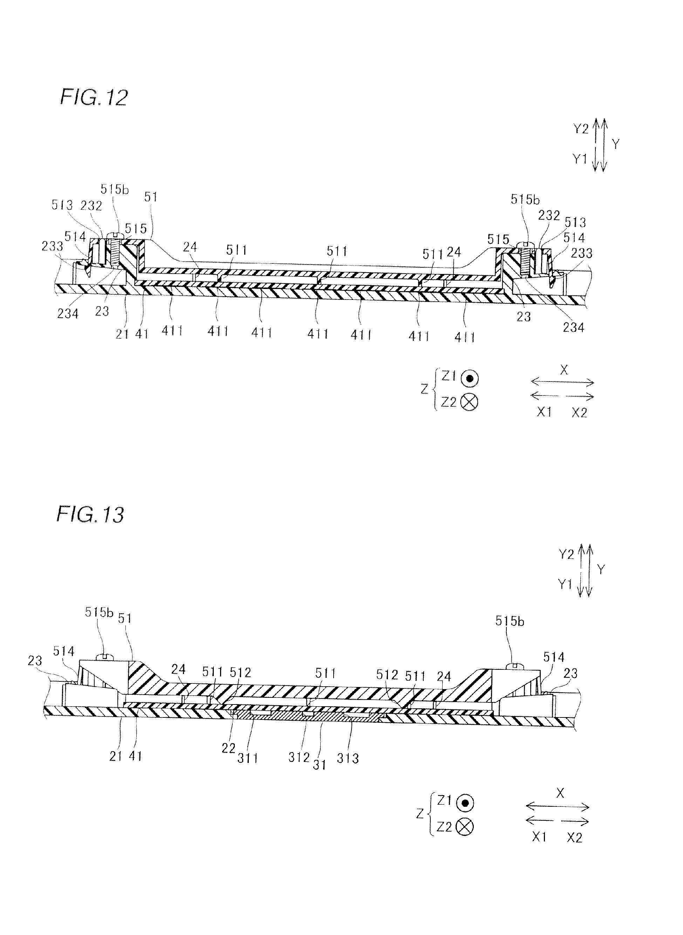

The substrate fixing member 51 is so formed that outer edge portions extending in the longitudinal direction have a larger thickness than the remaining portions in the direction (direction Y) for fixing the substrate fixing member 51 to the front cabinet 21, as shown in Figs. 8 and 10. The three ribs 511 and the two pressing portions 512 are formed to come into contact with and press the operation substrate 41 on the inner side (along arrow Y2) of the television set 1, as shown in Figs. 12 and 13. The three ribs 511 are formed to press positions, corresponding to the capacitive switches 411, of the surface of the operation substrate 41 opposite to the side provided with the capacitive switches 411 toward the inner surface of the front cabinet 21 respectively. Further, the ribs 511 are formed to position three of seven positions corresponding to the positions of the seven capacitive switches 411 provided on the operation substrate 41. In other words, the ribs 511 are formed to press every other position in the seven positions corresponding to those of the seven capacitive switches 411.

The ribs 511 have a width smaller than that of the seven capacitive switches 411 in the direction (direction X) where the same are adjacent to each other, as shown in Fig. 11. The ribs 511 are formed to press positions corresponding to substantially central portions of the capacitive switches 411 in plan view. Further, the ribs 511 are formed to extend in a direction substantially perpendicular to the direction (direction X) where the seven capacitive switches 411 are adjacent to each other. In addition, the ribs 51 are formed to extend from a first end portion (along arrow Z2) of the substrate fixing member 51 up to a substantially intermediate position of the substrate fixing member 51 in the direction Z.

The two pressing portions 512 are provided on an end portion of the substrate fixing member 51 along arrow Z1 at a prescribed interval from each other, as shown in Figs. 7 to 9. Further, the two pressing portions 512 are substantially triangularly formed (see Fig. 8). In addition, the two pressing portions 512 are formed to press a portion around a position, corresponding to the transparent resin plate 31, of the side of the operation substrate 41 opposite to the side opposed to the transparent resin plate 31 in a state holding the transparent resin plate 31 between the front cabinet 21 and the operation substrate 41.

Positioning holes 513 engaging with the second positioning portions 232 of the mounting portions 23 respectively for positioning the substrate fixing member 51 are formed one by one on both end portions of the substrate fixing member 51, as shown in Figs. 7 and 9. Threaded holes 515 are formed one by one on both end portions of the substrate fixing member 51 in the longitudinal direction (direction X) respectively. The threaded holes 515 are formed on positions corresponding to the threaded holes 234 of the mounting portions 23 in a state where the substrate fixing member 51 is positioned by the second positioning portions 232 and temporarily mounted on the mounting portions 23. The substrate fixing member 51 is formed to be fixed to the front cabinet 21 through the threaded holes 515 with the screws 515b.

The hooks 514 are provided one by one on both end portions of the substrate fixing member 51 in the direction X respectively, as shown in Figs. 7 to 9. The hooks 514 are formed to engage with the hook engaging portions 233 of the mounting portions 23. The substrate fixing member 51 is further provided with two hole portions 516 and 517. The hole portion 516 is provided for exposing the terminal 418 provided on the operation substrate 41 rearward (along arrow Y2) from the television set 1. The hole portion 517 is provided for exposing the terminal 419 provided on the operation substrate 41 rearward (along arrow Y2) from the television set 1.

The display portion 62 is arranged at the back (along arrow Y2) of the front cabinet 21 and fixed thereto, as shown in Fig. 1. The display portion 62 is formed to display pictures of television broadcasting on a front screen (along arrow Y1). Further, the display portion 62 has a rear frame 621 on the rear surface (along arrow Y2) thereof. The rear frame 621 is made of metal (sheet metal of SECC (electronic zinc-plated steel), for example). The rear frame 621 is provided with threaded holes 621a for mounting the circuit board 63a for signal processing and the circuit board 63b for power generation, threaded holes 621b for mounting the speaker/stand mounting member 64 and threaded holes 621c for mounting the cover member 66.

The circuit boards 63a and 63b are arranged at the back (along arrow Y2) of the display portion 62 and fixed to the rear frame 621 thereof, as shown in Fig. 1. Further, the circuit boards 63a and 63b are mounted on the threaded holes 621a of the rear frame 621 with screws 632 through screw receiving holes 631. In addition, the circuit boards 63a and 63b are connected to the display portion 62 by unshown wires respectively. The circuit board 63a includes a receiving portion (tuner) 633 capable of receiving television broadcasting.

The speaker/stand mounting member 64 is arranged at the back (along arrow Y2) of the display portion 62 and fixed to the rear frame 621 thereof, as shown in Fig. 1. The speaker/stand mounting member 64 is provided with screw receiving holes 648a and 648b. The speaker/stand mounting member 64 is made of resin such as polystyrene and formed by integral molding. The speaker/stand mounting member 64 is in the form of a vertical wall covering lower sides (along arrow Z2) of the circuit boards 63a and 63b mounted on the display portion 62. The speaker/stand mounting member 64 is mounted on the threaded holes 621b of the rear frame 621 by screws 649 and 662 through the screw receiving holes 648a and 648b respectively. The two speakers 65a and 65b are set on the speaker/stand mounting member 64.

The cover member 66 is arranged at the back (along arrow Y2) of the display portion 62 and fixed to the rear frame 621 thereof and the front cabinet 21, as shown in Fig. 1. The cover member 66 is so formed that the upper sides (along arrow Z1), the right and left sides (in the direction X) and the rear sides (along arrow Y2) of the circuit boards 63a and 63b mounted on the display portion 62 are not exposed outward. In other words, the cover member 66 is formed to cover the circuit boards 63a and 63b mounted on the display portion 62 along with the speaker/stand mounting member 64. The cover member 66 is formed to partially cover the rear side (along arrow Y2) of the rear frame 621 of the display portion 62. The cover member 66 has screw receiving holes 661. The cover member 66 is mounted on the threaded holes 621a to 621c of the rear frame 621 with screws 622 through the screw receiving holes 661.

The stand member 71 is formed to support the display body 61. The stand member 71 is arranged on the lower side (along arrow Z2) of the speaker/stand mounting member 64 as shown in Fig. 1, and formed to be mounted on the speaker/stand mounting member 64 with screws 712 through screw receiving holes 711.

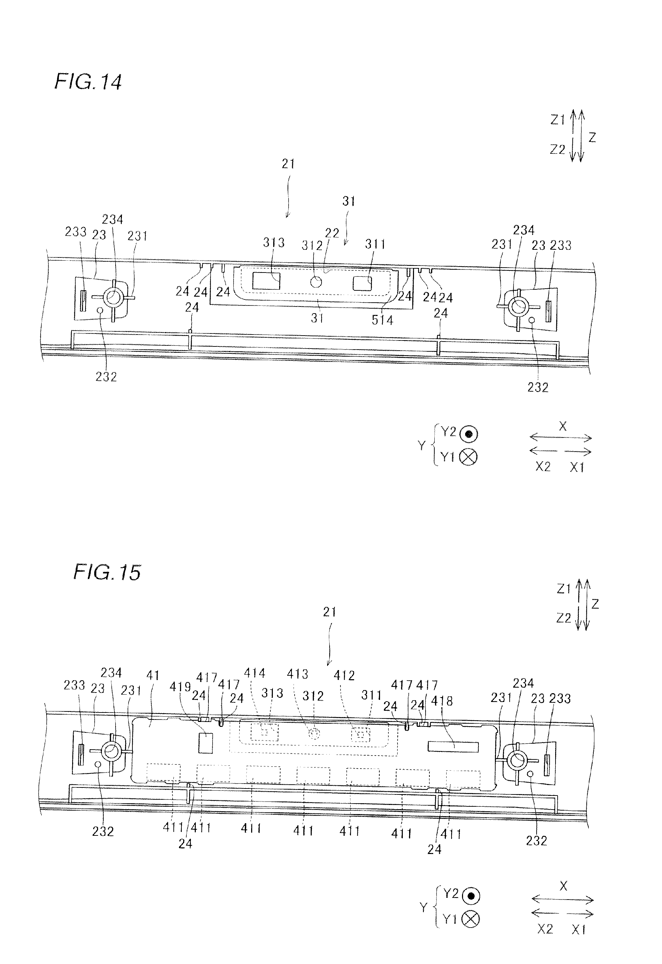

A procedure of mounting the operation substrate 41 and the substrate fixing member 51 is now described with reference to Figs. 11 to 15. First, the transparent resin plate 31 is fitted into the transparent resin plate mounting hole 22 of the front cabinet 21 and set on the front cabinet 21, as shown Fig. 14. In this state, the operation substrate 41 is fitted into the space between the two mounting portions 23 provided on the front cabinet 21 and set on the inner side (along arrow Y2) of the front cabinet 21, as shown in Fig. 15. Further, the operation substrate 41 is so set that the capacitive switches 411 thereof are in contact with the inner surface of the front cabinet 21. At this time, both end portions 416 and the notch portions 417 of the operation substrate 41 engage with the first and third positioning portions 231 and 24 respectively, to position the operation substrate 41 on the front cabinet 21. In this state, the substrate fixing member 51 is set on the mounting portions 23 of the front cabinet 21 from the side of the operation substrate 41 on the inner side (along arrow Y2) of the television set 1, as shown in Figs. 11, 12 and 13. The positioning holes 513 of the substrate fixing member 51 and the second positioning portions 232 of the front cabinet 21 engage with each other, thereby positioning the substrate fixing member 51. In this state, the substrate fixing member 51 is pushed into the front direction (along arrow Y1) of the front cabinet 21, and temporarily mounted on the mounting portions 23 of the front cabinet 21 by engaging the temporary mounting hooks 514 of the substrate fixing member 51 and the hook engaging portions 233 of the front cabinet 21 with each other. In this state, the substrate fixing member 51 is fixed to the mounting portions 23 of the front cabinet 21 with the screws 515b.

According to this embodiment, as hereinabove described, the television set 1 is provided with the substrate fixing member 51 having the ribs 511 pressing the positions, corresponding to the capacitive switches 411, of the surface of the operation substrate 41 opposite to the side provided with the capacitive switches 411 toward the inner surface of the front cabinet 21 and the substrate fixing member 51 is formed to fix the operation substrate 41 to the front cabinet 21 in the state pressing the operation substrate 41 so that the surfaces of the capacitive switches 411 closer to the front cabinet 21 and the inner surface of the front cabinet 21 are in close contact with each other, whereby the substrate fixing member 51 can fix the operation substrate 41 while pressing the capacitive switches 411 in the state in close contact with the inner surface of the front cabinet 21 without employing an adhesive. Therefore, the space between the capacitive switches 411 and the front cabinet 21 can be inhibited from formation of an air layer when the substrate fixing member 51 fixes the operation substrate 41, while the capacitive switches 411 and the front cabinet 21 can be easily separated from each other by unfixing the substrate fixing member 51. Consequently, replaceability (reworkability) of the capacitive switches 411 can be improved while suppressing reduction in sensitivity of the capacitive switches 411.

According to this embodiment, as hereinabove described, the ribs 511 are integrally formed on the substrate fixing member 51, whereby the ribs 511 integrally provided on the substrate fixing member 51 can easily press the positions of the operation substrate 41 corresponding to the capacitive switches 411 toward the inner surface of the front cabinet 21 without increasing the number of components.

According to this embodiment, the plurality of capacitive switches 411 are provided on the operation substrate 41 and the ribs 511 having the width smaller than that of the plurality of capacitive switches 411 in the direction (direction X) where the same are adjacent to each other and extending in the direction perpendicular to the direction (direction X) where the plurality of capacitive switches 411 are adjacent to each other, whereby the slender ribs 511 extending in the direction perpendicular to the direction where the plurality of capacitive switches 411 are adjacent to each other can press the capacitive switches 411 with a small width in the direction where the capacitive switches 411 are adjacent to each other. Thus, the ribs 511 can be deflected dissimilarly to a case of pressing the capacitive switches 411 with a large width in the direction where the capacitive switches 411 are adjacent to each other, whereby an excellent contact state can be maintained on surfaces (pressing surfaces) of the ribs 511 in contact with the operation substrate 41 by absorbing dimensional dispersion of the ribs 512. Consequently, the ribs 511 can stably press the positions of the operation substrate 41 corresponding to the capacitive switches 411.

According to this embodiment, the ribs 51 are formed to press the positions corresponding to the central portions of the capacitive switches 411 in plan view, whereby the ribs 511 can effectively press the capacitive switches 411 against the inner surface of the front cabinet 21.

According to this embodiment, the plurality of capacitive switches 411 are provided on the substrate fixing member 41 and the ribs 511 are formed to press partial positions in the positions, corresponding to the capacitive switches 411, of the side of the operation substrate 41 opposite to the side provided with the capacitive switches 411 so that the number of the ribs 511 can be reduced dissimilarly to a case of pressing all positions corresponding to the capacitive switches 411, whereby the structure of the television set 1 can be inhibited from complication.

According to this embodiment, the front cabinet 21 includes the mounting portions 23 for mounting the substrate fixing member 51, the mounting portions 23 include the first positioning portions 231 positioning the operation substrate 41 with respect to the front cabinet 21 and the substrate fixing member 51 is mounted on the mounting portions 23 to press the operation substrate 41 with the ribs 511 in the state where the first positioning portions 231 position the operation substrate 41 with respect to the front cabinet 21 so that the mounting portions 23 for mounting the substrate fixing member 51 also serve as the first positioning portions 231 positioning the operation substrate 41 with respect to the front cabinet 21, whereby no dedicated first positioning portions 231 may be separately provided for positioning the operation substrate 41 with respect to the front cabinet 21, but increase in number of components can be suppressed.

According to this embodiment, the mounting portions 23 include the second positioning portions 232 positioning the substrate fixing member 51 with respect to the front cabinet 21 and press the operation substrate 41 in the state where the first and second positioning portions 231 and 232 position the operation substrate 41 and the substrate fixing member 51 with respect to the front cabinet 21 respectively so that the mounting portions 23 for mounting the substrate fixing member 51 also serve as the second positioning portions 232 positioning the substrate fixing member 51 with respect to the front cabinet 21, whereby no dedicated second positioning portions 232 may be separately provided for positioning the substrate fixing member 51 with respect to the front cabinet 21, but increase in number of components can be suppressed. Further, both of the operation substrate 41 and the substrate fixing member 51 are positioned with respect to the front cabinet 21, whereby the ribs 511 of the substrate fixing member 51 can reliably press the positions of the operation substrate 51 corresponding to the capacitive switches 411.

According to this embodiment, the substrate fixing member 51 includes the temporary mounting hooks 514, the front cabinet 21 includes the hook engaging portions 233 engaging with the temporary mounting hooks 514 of the substrate fixing member 51 and the substrate fixing member 51 is temporarily mounted by engaging the temporary mounting hooks 514 with the hook engaging portions 233 of the front cabinet 21 in the state positioning the substrate fixing member 51 with respect to the front cabinet 21 by the second positioning portions 232 so that the substrate fixing member 51 can be mounted on the front cabinet 21 in the state mounted on the mounting portions 23 by engaging the hooks 514 and the hook engaging portions 233 with each other, whereby a mounting operation for the substrate fixing member 51 can be easily performed.

According to this embodiment, the substrate fixing member 51 is positioned with respect to the front cabinet 21 by the second positioning portions 232 and fixed to the mounting portions 23 with the screws 515b in the state temporarily mounted by engaging the temporary mounting hooks 514 with the hook engaging portions 233 of the front cabinet 21, whereby the temporarily mounted substrate fixing member 51 positioned with respect to the front cabinet 21 by the second positioning portions 232 can be reliably mounted on the mounting portions 23 with the screws 515b.

According to this embodiment, the substrate fixing member 51 is rectangular in plan view and so formed that the outer edge portions extending in the longitudinal direction of the rectangular shape have the thickness larger than that of the remaining portions in the direction for fixing the substrate fixing member 51 to the front cabinet 21 so that mechanical strength of the substrate fixing member 51 can be increased, whereby the substrate fixing member 51 can be inhibited from distortion. Consequently, the substrate fixing member 51 can stably press the positions of the operation substrate 41 corresponding to the capacitive switches 411 toward the inner surface of the front cabinet 21.

According to this embodiment, the transparent resin plate 31 is mounted on the front cabinet 21, the substrate fixing member 51 includes the pressing portions 512 identical in height to the ribs 511 and the pressing portions 512 press the vicinity of the position, corresponding to the transparent resin plate 31, of the side of the operation substrate 41 opposite to the side opposed to the transparent resin plate 31 in the state holding the transparent resin plate 31 between the front cabinet 21 and the operation substrate 41 so that the pressing portions 512 press the transparent resin plate 31 mounted on the front cabinet 21 toward the inner surface of the front cabinet 21, whereby the transparent resin plate 31 can be inhibited from subsiding into the front cabinet 21 due to external force applied in such a case that the user presses the transparent resin plate 31 into the front cabinet 21 from outside.

Although the present invention has been described and illustrated in detail, it is clearly understood that the same is by way of illustration and example only and is not to be taken by way of limitation, the spirit and scope of the present invention being limited only by the terms of the appended claims.

For example, while the present invention is applied to the television set in the aforementioned embodiment, the present invention is not restricted to this. The present invention may alternatively be applied to a display other than the television set. For example, the present invention may be applied to a display or the like of a PC (personal computer).

While the seven capacitive switches are provided on the operation substrate in the aforementioned embodiment, the present invention is not restricted to this. According to the present invention, the operation substrate may alternatively be provided with one capacitive switch or capacitive switches of a number other than seven.

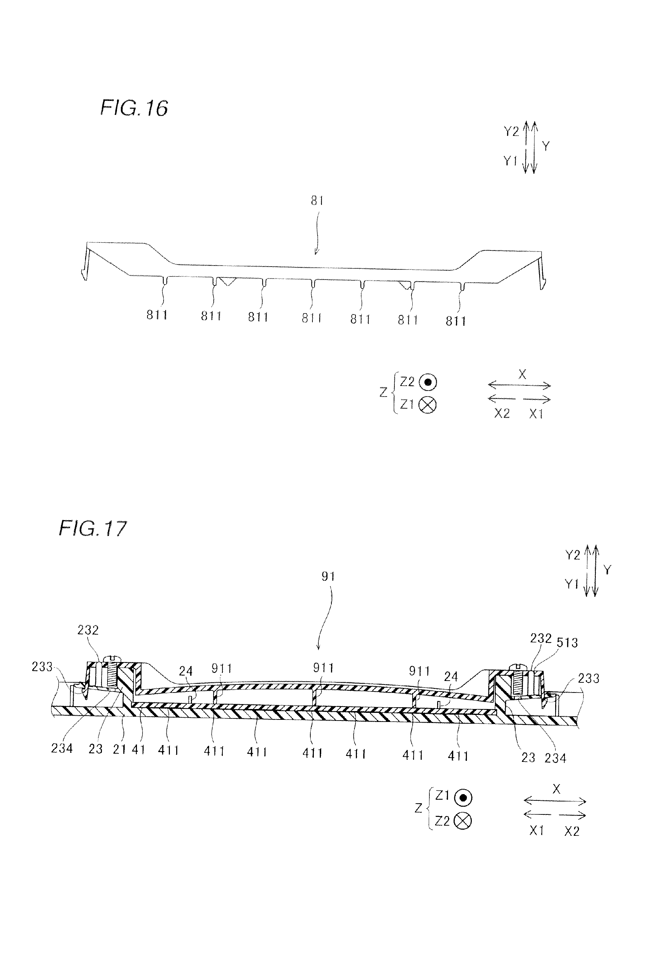

While the ribs press three of the seven positions, corresponding to the capacitive switches, of the operation substrate in the aforementioned embodiment, the present invention is not restricted to this. According to the present invention, seven first pressing portions may alternatively be provided to correspond to seven capacitive switches respectively, as in a first modification shown in Fig. 16. More specifically, seven ribs 811 provided on a substrate fixing member 81 may press seven positions, corresponding to the seven capacitive switches, of an operation substrate, or may press one, two, four, five or six of the positions corresponding to the seven capacitive switches.

While the substrate fixing member is provided with the two pressing portions (second pressing portions) in the aforementioned embodiment, the present invention is not restricted to this. According to the present invention, the substrate fixing member may alternatively be provided with one or at least three second pressing portions.

While the pressing portions (second pressing portions) provided on the substrate fixing member are triangularly formed in the aforementioned embodiment, the present invention is not restricted to this. According to the present invention, the pressing portions may alternatively be rectangularly or trapezoidally formed, for example.

While the ribs are integrally provided on the substrate fixing member as first pressing portions in the aforementioned embodiment, the present invention is not restricted to this. According to the present invention, dedicated pressing portions may alternatively be provided as first pressing portions, independently of the substrate fixing member.

While the hook engaging portions are in the form of holes in the aforementioned embodiment, the present invention is not restricted to this. According to the present invention, the hook engaging portions may be provided in a shape other than the hole shape.

While the substrate fixing member is so formed that the portions of the substrate fixing member provided with the ribs (first pressing portions) are substantially horizontal with respect to the inner surface side of the front cabinet in the aforementioned embodiment, the present invention is not restricted to this. According to the present invention, a substrate fixing member 91 may alternatively be formed to be fixed to a housing in a state where portions of the substrate fixing member 91 provided with projecting portions 911 (first pressing portions) convexly warp in a direction opposite to the inner surface of the housing by reaction force of the projecting portions 911 pressing a substrate, as in a second modification shown in Fig. 17.

## Claims

1. A display (1) comprising:
a housing (21);
a display portion (62) having a display region arranged to be exposed from said housing;
a substrate (41) mounted on an inner surface of said housing and provided with a capacitive switch (411) on a surface closer to said inner surface of said housing; and
a substrate fixing member (51) having a first pressing portion (511) pressing a position, corresponding to said capacitive switch, of a surface of said substrate opposite to the side provided with said capacitive switch toward said inner surface of said housing, wherein
said substrate fixing member is formed to fix said substrate to said housing in a state pressing said substrate so that a surface of said capacitive switch closer to said housing and said inner surface of said housing are in close contact with each other.

2. The display according to claim 1, wherein
said first pressing portion of said substrate fixing member includes a projecting portion (511) pressing said position, corresponding to said capacitive switch, of said surface of said substrate opposite to the side provided with said capacitive switch.

3. The display according to claim 2, wherein
said projecting portion is formed by a rib (511) integrally provided on said substrate fixing member.

4. The display according to claim 3, wherein
a plurality of said capacitive switches are provided on said surface of said substrate closer to said inner surface of said housing, and
said rib has a width smaller than the width of said capacitive switches in a direction where said plurality of capacitive switches are adjacent to each other and has a shape extending in a direction perpendicular to said direction where said plurality of capacitive switches are adjacent to each other.

5. The display according to claim 2, wherein
said projecting portion is formed to press a position corresponding to a central portion of said capacitive switch in plan view.

6. The display according to claim 2, wherein
said substrate fixing member is formed to be fixed to said housing in a state convexly warping in a direction opposite to said inner surface of said housing by reaction force of said projecting portion pressing said substrate.

7. The display according to claim 1, wherein
a plurality of said capacitive switches are provided on said surface of said substrate closer to said inner surface of said housing, and
the display is so formed that said first pressing portion presses a partial position in a plurality of positions, corresponding to said capacitive switches, of said surface of said substrate opposite to the side provided with said capacitive switches.

8. The display according to claim 1, wherein
said housing includes a mounting portion (23) for mounting said substrate fixing member,
said mounting portion includes a first positioning portion (231) positioning said substrate with respect to said housing, and
said substrate fixing member is mounted on said mounting portion to press said substrate with said first pressing portion in a state where said first positioning portion positions said substrate with respect to said housing.

9. The display according to claim 8, wherein
said mounting portion includes a second positioning portion (232) positioning said substrate fixing member with respect to said housing, and
said substrate fixing member is mounted on said mounting portion to press said substrate with said first pressing portion in a state where said first positioning portion and said second positioning portion position said substrate with respect to said housing.

10. The display according to claim 9, wherein
said substrate fixing member includes a temporary mounting hook (514),
said housing includes a hook engaging portion (233) engaging with said temporary mounting hook of said substrate fixing member, and
said substrate fixing member is formed to be temporarily mounted by engaging said temporary mounting hook with said hook engaging portion of said housing in a state positioned with respect to said housing by said second positioning portion.

11. The display according to claim 10, wherein said substrate fixing member is formed to be fixed to said mounting portion with a fastening member in a state positioned with respect to said housing by said second positioning portion and temporarily mounted by engaging said temporary mounting hook with said hook engaging portion of said housing.

12. The display according to claim 1, wherein
said substrate fixing member has a rectangular shape in plan view, and is so formed that an outer edge portion extending in the longitudinal direction of said rectangular shape has a larger thickness than another portion in a direction for fixing said substrate fixing member to said housing.

13. The display according to claim 1, wherein
a transparent resin plate is mounted on said housing,
said substrate fixing member includes a second pressing portion (512) having a height identical to the height of said first pressing portion, and
said second pressing portion is formed to press a portion around a position, corresponding to said transparent resin plate, of a side of said substrate opposite to a side opposed to said transparent resin plate in a state holding said transparent resin plate between said housing and said substrate.
